# EUROPÄISCHE PATENTSCHRIFT

(11) **EP 0 397 225 B1**
(45) Veröffentlichungstag und Bekanntmachung des Hinweises auf die Patenterteilung: **14.07.1993**
(21) Anmeldenummer: 90200886.1
(22) Anmeldetag: 11.04.1990
(51) Int. Cl.: B01D 39/14

(54) **Filterelement zur Abscheidung von Stäuben aus Gasen**
Filter element for removing dusts from gases
Elément filtrant pour séparer des gaz de poussières

(30) Priorität: 10.05.1989 DE 3915187
(43) Veröffentlichungstag der Anmeldung: 14.11.1990
(73) Patentinhaber: METALLGESELLSCHAFT Aktiengesellschaft, 60015 Frankfurt (DE)
(72) Erfinder: Weber, Ekkehard, Dr., D-4300 Essen 17 (DE)

(56) Entgegenhaltungen:
- EP-A- 0 327 737
- DE-A- 3 025 126
- DE-A- 3 134 148

## Beschreibung

Die Erfindung bezieht sich auf ein Filterelement zur Abscheidung von Stäuben aus Gasen, insbesondere aus Luft, das aus Metallen, Legierungen oder Kunststoffen besteht, dünnwandig und folienartig ist, eine Wandstärke von 0,05 bis 2 mm hat sowie eine große Anzahl von regelmäßig angeordneten Löchern unterschiedlicher Form und Größe aufweist, deren Querschnitt von der Form des Kreises abweicht und deren hydraulischer Durchmesser 0,01 bis 1 mm beträgt.

In der DE-A-3 134 148 werden Filterelemente zur Abscheidung von Stäuben aus Gasen beschrieben, die aus unterschiedlichen, meist dünnwandigen Materialien, die mit Löchern unterschiedlicher Art, Form und Größe versehen sind, aufgebaut sind. Diese Filterelemente zeichnen sich durch einen mittleren Lochdurchmesser zwischen 5 und 200 µm aus. Das Verhältnis von Lochabstand zum mittleren Durchmesser beträgt vorzugsweise 4 bis 5. Zur Verhinderung von Staubspitzen während des Betriebsanfanges können entweder die Filterelemente oder, bei geerdeten Filterelementen, der abzuscheidende Staub in bekannter Weise elektrisch aufgeladen werden.

In der EP-A-0 327 737 wurde bereits ein Filterelement vorgeschlagen, bei dem die von den Löchern bedeckte Fläche 30 bis 90 % der Frontfläche des Filterelements einnimmt. Der EP-A-0 327 737 werden als Prioritätstag der 9.1.1988 und als Veröffentlichungstag der Anmeldung der 16.8.1989 zugeschrieben. Beim Einsatz des beschriebenen Filterelements hat sich gezeigt, daß es zwar einen sehr geringen Druckverlust, jedoch keine ausreichende Entstaubungsleistung sowie eine für den Dauerbetrieb nur unzureichende mechanische Stabilität besitzt. Dies hat insbesondere dann nachteilige Auswirkungen, wenn die von den Löchern bedeckte Fläche 50 bis 90 % der Frontfläche des Filterelements einnimmt. Der Erfindung liegt daher die Aufgabe zugrunde, das in der EP-A-0 327 737 vorgeschlagene Filterelement so zu verbessern, daß es eine hohe mechanische Stabilität besitzt und bei hoher Entstaubungsleistung über einen möglichst langen Zeitraum bei möglichst niedrigem Druckverlust betrieben werden kann.

Die der Erfindung zugrundeliegende Aufgabe wird dadurch gelöst, daß die von den Löchern bedeckte Fläche 3 bis 25 % der Frontfläche des Filterelements einnimmt. In überraschender Weise hat sich gezeigt, daß das Filterelement auch dann noch im Vergleich zu bekannten Filtermedien niedrige Druckverluste ermöglicht, wenn die Anzahl der Löcher so verringert wird, daß die von den Löchern bedeckte Fläche nur 3 bis 25 % der Frontfläche des Filterelements einnimmt. Während des Filtervorgangs kommt es weder zu Staubdurchbrüchen noch zu Verstopfungen. Es hat sich insbesondere als vorteilhaft erwiesen, daß auch Gase, welche einen schwankenden Staubgehalt aufweisen, zuverlässig mit dem erfindungsgemäßen Filterelement entstaubt werden können.

Das entsprechend der Erfindung gestaltete Filterelement kann in Form einer ebenen Fläche, eines Schlauchs oder einer Tasche verwendet werden. Die Reinigung des Filterelements erfolgt in bekannter Weise durch Klopfung und/oder durch ein im Gegenstrom durch das Filterelement geführtes Gas, wobei der Gegenstrom kontinuierlich oder gepulst ausgebildet sein kann. Mit dem Filterelement werden selbst Feinstäube so weit aus dem Rohgas entfernt, daß das Reingas einen Staubgehalt < 10 mg/Nm³ hat. Im Dauerbetrieb hat sich gezeigt, daß die entsprechend der Erfindung gestalteten Filterelemente über einen Zeitraum von 800 Betriebsstunden formstabil sind und keine mechanischen Beschädigungen (längere Risse, Ausbruch zwischen mehreren Löchern) aufweisen.

Der Gegenstand der Erfindung wird nachfolgend anhand eines Ausführungsbeispiels näher erläutert.

In einem Versuchsstand wurden zwei Filterelemente mit identischen Schlitzlöchern getestet, wobei lediglich der Abstand der Löcher unterschiedlich war. Dadurch wies das Element 1 eine von den Löchern bedeckte, freie Fläche von 61 % auf, während beim Element 2 infolge eines achtfachen Schlitzabstandes die von den Löchern bedeckte, freie Fläche 18 % betrug. Durch die Verringerung der freien Fläche konnte der maximale Reingasstaubgehalt von 350 mg/Nm³ beim Element 1 auf unter 80 mg/Nm³ beim Element 2 abgesenkt werden. Gleichzeitig erhöhte sich der Druckverlust bei gleicher Staubbelastung in überraschender Weise lediglich um etwa 15 %.

## Patentansprüche

1. Filterelement zur Abscheidung von Stäuben aus Gasen, insbesondere aus Luft, das aus Metallen, Legierungen oder Kunststoffen besteht, dünnwandig und folienartig ist, eine Wandstärke von 0,05 bis 2 mm hat sowie eine große Anzahl von regelmäßig angeordneten Löchern unterschiedlicher Form und Größe aufweist, deren Querschnitt von der Form des Kreises abweicht und deren hydraulischer Durchmesser 0,01 bis 1 mm beträgt, wobei die von den Löchern bedeckte Fläche 3 bis 25 % der Frontfläche des Filterelements einnimmt.

## Claims

1. A filter element for separating dusts from gases, in particular from air, which consists of metals, alloys or plastics, is thin-walled and foil-like, has a wall thickness of 0.05 to 2 mm and a large number of regularly arranged holes of differing shapes and sizes, the cross-section of which deviates from the shape of a circle, and the hydraulic diameter of which is 0.01 to 1 mm, wherein the surface area covered by the holes takes up 3 to 25% of the front face of the filter element.

## Revendications

1. Élément filtrant pour séparer des poussières de gaz, notamment de l'air, qui est en métaux, en alliages ou en matières plastiques, qui est à paroi mince et en forme de feuille, qui a une épaisseur de paroi de 0,05 à 2 mm, ainsi qu'un grand nombre de trous répartis régulièrement de formes et de dimensions différentes, dont la section transversale s'écarte de la forme circulaire et dont le diamètre hydraulique est compris entre 0,01 et 1 mm, la surface recouverte par les trous occupant de 3 à 25 % de la surface frontale de l'élément filtrant.
